Europäisches Patentamt

European Patent Office

Office européen des brevets

(11) Veröffentlichungsnummer: **0 256 394**
**B1**

(12) **EUROPÄISCHE PATENTSCHRIFT**

(45) Veröffentlichungstag der Patentschrift:
29.08.90

(21) Anmeldenummer: 87111087.0

(22) Anmeldetag: 31.07.87

(51) Int. Cl.⁵: **B23K 15/00**, B23K 26/00,
F01M 11/02

(54) Verfahren zum Herstellen einer für flüssige oder gasförmige Medien bestimmten Leitung.

(30) Priorität: 09.08.86 DE 3627033

(43) Veröffentlichungstag der Anmeldung:
24.02.88 Patentblatt 88/8

(45) Bekanntmachung des Hinweises auf die Patenterteilung:
29.08.90 Patentblatt 90/35

(84) Benannte Vertragsstaaten:
DE ES FR GB IT SE

(56) Entgegenhaltungen:
DE-A- 2 011 927
US-A- 3 022 862
US-A- 3 458 683

PATENT ABSTRACTS OF JAPAN, Band 10,
Nr. 59 (M-459)[2116], 8. März 1986; &
JP-A-60 206 589 (SUMITOMO KINZOKU KOGYO
K.K.) 18.10.1985
PATENT ABSTRACTS OF JAPAN, Band 9,
Nr. 179 (M-399)[1902], 24. Juli 1985; &
JP-A-60 49 883 (MITSUBISHI JIDOSHA K.K.) 19.03.1985

(73) Patentinhaber: Bayerische Motoren Werke
Aktiengesellschaft, Patentabteilung
AJ-30 Postfach 40 02 40 Petuelring 130,
D-8000 München 40(DE)

(72) Erfinder: Koch, Helmut, Ismaniger Strasse 85,
D-8050 Freising(DE)
Erfinder: Kaindl, Wolfgang, Blütenstrasse 21,
D-8052 Moosburg(DE)

(74) Vertreter: Bücken, Helmut, Bayerische Motoren Werke
Aktiengesellschaft Postfach 40 02 40 Petuelring 130 -
AJ-30, D-8000 München 40(DE)

## Beschreibung

Die Erfindung bezieht sich auf ein Verfahren zum Herstellen einer für flüssige oder gasförmige Medien bestimmten Leitung nach dem Oberbegriff des Patentanspruches 1.

Bei Brennkraftmaschinen mit obenliegenden Nockenwellen ist es bekannt, zur Schmierung der jeweiligen Paarung eines Nockens mit einem weiteren Ventiltriebelement das Schmieröl über eine Verteilerleitung zuzuführen. Die mit dem Schmierölkreislauf der Brennkraftmaschine ölführend in Verbindung stehende Verteilerleitung weist in einer Leitungswand angeordnete Austrittsöffnungen auf, durch die das Schmieröl als Strahl auf den jeweiligen Nocken bzw. das jeweilige Ventiltriebelement gerichtet ist. Diese zur Strahlbildung vorgesehenen Austrittsöffnungen sind zur Vermeidung eines großen Druckabfalles im Schmierölsystem von relativ kleinem Durchmesser.

Bei einer beispielsweise aus der US-A 3 022 862 bekannten und aus einem Rohrabschnitt gefertigten Verteilerleitung sind die Austrittsöffnungen mechanisch gebohrt. Hierbei entsteht beim Durchtritt des Bohrers durch die Wand der Verteilerleitung an der Rohrinnenseite ein Bohrgrat. Dieser Bohrgrat kann den Schmieröl-Strahl hinsichtlich Menge und Richtung erheblich stören. Bei einem im Umfang geschlossenen und aus Gewichtsgründen im Durchmesser relativ kleinen Rohrabschnitt für die Schmieröl-Verteilerleitung ist eine restlose Beseitigung des Bohrgrates an sämtlichen Austrittsöffnungen eines im wesentlichen über die Länge der Brennkraftmaschine sich erstreckenden Rohrabschnittes unter wirtschaftlichen Gesichtspunkten kaum möglich.

Um die durch spanabhebende Bearbeitung hergestellten Austrittsöffnungen für eine einwandfreie Strahl-Ausbildung zu- und abströmseitig bearbeiten zu können, sind gebaute Verteilerleitungen bekanntgeworden. Bei den gebauten Verteilerleitungen liegt das Problem im Verfahren für die dichte Verbindung beider Teile, wobei die in einem Teil ausgebildeten Austrittsöffnungen keiner Veränderung unterworfen werden dürfen. So scheidet das in der US-A 90 322 beschriebene Verfahren aus, bei dem mit zwei mit Flanschen ausgerüsteten Teilen durch Preßschweißung der Flansche eine Leitung gebildet wird. Hohe Temperaturen zur Herstellung einer unlösbaren Verbindung zwischen den die Leitung bildenden Teilen führen vor allem neben einem Verzug der Verteilerleitung zu einer Verzunderung. Ein nicht restlos aus dem Innern der Verteilerleitung entfernter Zunder ergibt die Gefahr der Verlegung von Austrittsöffnungen. Ferner können diese durch die hohen Schweißtemperaturen ihre geometrische Form ändern und damit die Strahlbildung ungünstig beeinflußen. Beim Verlöten der beiden die Verteilerleitung bildenden Teile werden zwar geringere Temperaturen benötigt, jedoch besteht hierbei die erhebliche Gefahr, daß die in einem der Teile vorhandenen Austrittsöffnungen durch verlaufendes Lot verschlossen werden. Ein nachträgliches Aufbohren einer derart verschlossenen Öffnung hat die weiter oben für eine aus einem Rohrabschnitt gebildete Verteilerleitung bekannten Nachteile zur Folge. Schließlich können die eine beidendig geschlossene Verteilerleitung bildenden Teile durch eine umlaufende Falzverbindung miteinander verbunden werden. Wegen der nicht unbeträchtlichen Schmieröldrücke in der Verteilerleitung muß die Falzverbindung sehr sorgfältig ausgebildet werden, um Undichtigkeit zu vermeiden. Nachteilig ist hier ferner neben dem Materialaufwand auch der erhebliche Aufwand an entsprechenden Werkzeugen.

Schließlich beschreibt sowohl die DE-A 2 011 927 als auch die JP-A 60 206 589 – von denen jede als gattungsbildende Schrift dienen kann – jeweils ein Herstellverfahren für eine aus einem Blechstreifen geformte Rohrleitung, wobei die Stoßflächen gegeneinander verspannt und ein Elektronen- respektive Laserstrahl im wesentlichen parallel zur Ebene der verspannten Stoßflächen auf die Schweißstelle gerichtet ist. Zur Erzielung der spaltfreien Anordnung der Stoßflächen im Bereich der kontinuierlich durchgeführten Schweißung läuft die Rohrleitung zwischen zwei diese teilweise formschlüssig umgreifende Führungswalzen. Bei diesem Herstellverfahren können die für die eine Verteilerleitung erforderlichen Austrittsöffnungen zur Vermeidung von Deformationen durch die Führungswalzen erst nach Abschluß des Schweißvorganges angeordnet werden. Daraus ergibt sich der Nachteil, daß die Austrittsöffnungen leitungsinnenseitig weder kontrolliert noch evtl. nachbearbeitet werden können.

Der Erfindung liegt die Aufgabe zugrunde, ein Herstellverfahren für eine gebaute Verteilerleitung anzugeben, mit dem aus unterschiedlichen Wandstärken und Werkstoffen bildbare Teile bei einwandfreier Oberfläche und bleibender hoher geometrischer Qualität der Austrittsöffnungen für eine einwandfreie Spritzstrahl-Ausbildung flüssigkeitsdicht verbunden werden.

Gelöst wird die Aufgabe gemäß dem kennzeichnenden Teil des Anspruches 1.

Gegenüber den bekannten Verfahren ergibt die Erfindung den Vorteil relativ schmaler Wärmezonen um die Schweißverbindungen mit relativ rascher Wärmeabfuhr einerseits über das Bauteil und andererseits über die Spanneinrichtung, so daß eine in den Bereich der vorhandenen Austrittsöffnungen reichende Verzunderung vermieden ist. Neben dem weiteren Vorteil eines fehlenden Wärme-Verzuges der Verteilerleitung ergibt sich schließlich auch der Vorteil, daß die in einem der die Verteilerleitung bildenden Teile angeordneten Austrittsöffnungen völlig unbeschädigt bleiben.

Zwar ist es aus der DE-C 2 920 100 für die Herstellung einer Kraftstoffeinspritzdüse bekannt, ein die Einspritzdüsenöffnungen tragendes Vorsatzteil und einen Düsenkörper gegeneinander zu verspannen und diese an den Berührungsflächen miteinander mittels Laser- oder Elektronen-Strahl zu verschweißen. Die wegen des hohen Einspritzdruckes relativ massiven Teile sind am äußeren Umfang durch eine im Querschnitt V-förmige Schweißnaht miteinander verbunden. Zwischen der Schweißnaht und der das Medium führenden Kammer sind jedoch die Stoßflächen über erhebliche Erstreckungen hinweg nicht miteinander verbunden, so daß durch die bei kraftstofführenden Teilen üblicherweise auftretenden dynamischen Belastungen Kraftstoff zwischen die Stoßflächen eindringen kann und somit die Schweißnaht zusätzlich beansprucht wird.

Demgegenüber hat die Erfindung den Vorteil, daß durch die Ausbildung der Schmelzzone in den Stoßflächen der gegeneinander verspannten Teile die Schmelzzone bis auf einen gewünscht kleinen Abstand von der mediumsführenden Kammer der Verteilerleitung ausgebildet werden kann und somit eine aus dynamischem Spaltverhalten zwischen den Stoßflächen herrührende zusätzliche Belastung der Schweißverbindung vermieden wird.

Weiter ermöglicht die Erfindung die Bildung einer Verteilerleitung aus im wesentlichen maßgleich gestalteten Blechstreifen, wobei zumindest in einem eine Sicke zur Bildung des Verteilerquerschnittes vorgesehen ist. Die zwischen Längsflanschen verlaufende Sicke endet in beiden Endbereichen des Blechstreifens jeweils in einem Abstand von der Endbegrenzung unter Belassung von die Längsflansche verbindenden Querflanschen. Damit können beide die Verteilerleitung bildenden Blechstreifen entlang dem Umfang der in Draufsicht gesehenen Sicke ohne Unterbrechung des Schweißvorganges miteinander verbunden werden. Ein Schweißen ohne Unterbrechung ist für die Dichtheit der Schweißverbindung vorteilhaft. Da ferner mit der Erfindung wegen der sehr schmalen Wärmezone entlang der Schweißverbindung die Schweißung nahe der querschnittsbildenden Sicke möglich ist, kann ein Teil der Längs- und Querflansche als Spannflansch dienen. Der Spannflansch dient neben der Wärmeabfuhr beim Schweißen vor allem dazu, nahe der mediumsführenden Kammer spaltfrei gegeneinander verspannte Stoßflächen zu verwirklichen.

Dieser Spannflansch wird nach Anspruch 2 nach dem Schweißen zur Verringerung des Gewichtes der Verteilerleitung in einem Stanz-Vorgang entfernt. Dabei kann der Stanzschnitt nahe der Schweißverbindung vorgesehen sein, wobei der Stanzschnitt zur Erzielung eines geringstmöglichen Gewichtes einer derartigen Verteilerleitung einen deren Kontur angepaßten, krummlinigen Verlauf aufweisen kann.

In weiterer Ausgestaltung der Erfindung werden zur Verringerung des Arbeitsaufwandes und Steigerung der Qualität der Austrittsöffnungen diese nach Anspruch 4 mittels eines Laserstrahles hergestellt. Damit ist eine aus verformten Blechteilen hergestellte Verteilerleitung mit einwandfreien Oberflächen, insbesondere an der Innenseite der Verteilerleitung, in verzugsfreiem Zustand mit Austrittsöffnungen von hoher geometrischer Qualität zur einwandfreien Spritz-Strahlbildung erreicht.

Weiter ermöglicht die Erfindung nach Anspruch 5 die freie Wahl von Blechstreifen unterschiedlicher Stärke. Dazu können auch Blechstreifen unterschiedlicher Werkstoffe nach Anspruch 7 zur Auswahl stehen, die mittels Laser- oder Elektronen-Strahl einwandfrei miteinander verschweißt werden. So kann einem die Austrittsöffnungen aufweisenden Teil der Verteilerleitung aus einem gegen die Spritz-Strahl-Abrasion resistenten Werkstoff ein aus Gewichtsgründen aus einem leichten Werkstoff gebildetes weiteres Teil zur Bildung der Verteilerleitung zugeordnet werden. Dieser Vorteil kann beispielsweise dann genutzt werden, wenn die als Schmieröl-Spritzöffnungen dienenden Austrittsöffnungen in einem relativ starken Blechstreifen zur Ausbildung eines sich spät auflösenden Strahles angeordnet sind. Ein die Austrittsöffnungen aufweisender, relativ starker Blechstreifen bleibt zweckmäßigerweise unverformt und wird zur Bildung einer Verteilerleitung mit einem im Querschnitt durch eine Sicke hutförmig verformten Blechstreifen geringerer Stärke verschweißt.

Die Erfindung ist nicht nur auf die Herstellung von Schmieröl-Verteilerleitungen beschränkt, sie kann auch für die Herstellung von Kraftstoff-Verteilerleitungen vorteilhaft angewandt werden. Bei Kraftstoff-Verteilerleitungen kann das Erfordernis zusätzlicher Einbauten gegeben sein, für das als gesonderte Einbauteile eine Halterung erforderlich ist. Mit der Erfindung können durch die relativ schmale Wärmezone um die Schweißverbindung vor allem wärmeempfindliche Bauteile in einer Ausnehmung in einem der Teile der Verbindungsleitung angeordnet und zwischen diesen miteinander zu verschweißenden Teilen geklemmt werden, wobei die Begrenzung der Ausnehmung entsprechend der Wärmebelastbarkeit des Einbauteiles von der Schweißverbindung beabstandet angeordnet wird. Ausgestaltungen hierfür sind im Anspruch 6 beschrieben. Damit erübrigen sich gesonderte Haltevorrichtungen für Einbauteile.

Das erfindungsgemäße Verfahren zum Herstellen einer für flüssige oder gasförmige Medien bestimmten Leitung ist anhand einer in der Zeichnung dargestellten Schmieröl-Verteilerleitung für eine Brennkraftmaschine beschrieben. Es zeigen:

Fig. 1 maßgleiche Blechstreifen als Unter- und Oberteil zur Bildung einer Schmieröl-Verteilerleitung,

Fig. 2 die in einer Spannvorrichtung zum Laser-Schweißen angeordnete Verteilerleitung gemäß dem Schnitt II-II nach Fig. 1,

Fig. 3 die im Querschnitt gemäß dem Schnitt II-II in Fig. 1 gezeigte Verteilerleitung in einem Stanz-Werkzeug zum Abtrennen des Spannflansches,

Fig. 4 eine weitere, im Querschnitt dargestellte Verteilerleitung mit einer zwischen Ober- und Unterteil eingeklemmten Membrane.

Für eine nicht gezeigte Brennkraftmaschine mit obenliegender Nockenwelle ist zur Schmierung der Nocken und der mit diesen zusammenwirkenden weiteren Ventiltriebelemente eine Schmieröl-Verteilerleitung 10 vorgesehen, die aus einem Unterteil 11 und einem Oberteil 12 hergestellt wird. Unterteil 11 und Oberteil 12 werden jeweils aus einem Blechstreifen gebildet. Die Blechstreifen für Unterteil 11 und Oberteil 12 werden konturengleich zugeschnitten. Der Blechstreifen für das Unterteil 11 weist gegenüber dem Blechstreifen für das Oberteil 12 eine größere Stärke auf. Im Unterteil 11 sind Austrittsöffnungen 14 vorgesehen, die als Schmieröl-Spritzöffnungen dienen. Mit dem stärkeren Blechstreifen für das Unterteil 11 wirken sich die Austrittsöffnungen 14 günstig auf die Bildung von Schmieröl-Spritzstrahlen aus. Um an allen Austrittsöffnungen 14 eine günstige Strahl-Qualität zu erreichen, und ferner den Herstellungsaufwand zu verringern, werden die Austrittsöffnungen 14 mittels eines Laserstrahles gebohrt. Weiter weist das Unterteil 11 einen Durchgang 15 für eine nicht dargestellte Hohlschraube auf, über die aus dem Schmierölkreislauf das Schmieröl der Verteilerleitung 10 zugeführt wird.

Der das Oberteil 12 bildende Blechstreifen ist mit einer in Längsrichtung zwischen Längsflanschen 16 verlaufenden Sicke 17 ausgebildet, die in beiden Endbereichen des Blechstreifens jeweils in einem Abstand von der Endbegrenzung unter Belassung von die Längsflansche 16 verbindenden Querflanschen 18 endet. Weiter weist das Oberteil 12 eine mit der Durchbrechung 15 im Unterteil 11 fluchtende Durchbrechung 19 für die nicht dargestellte Hohlschraube auf. Die Sicke 17 ist um die Durchbrechung 19 konzentriert erweitert zur Aufnahme eines aus Fig. 2 ersichtlichen Stützringes 20. Dieser dient bei eingesetzter Hohlschraube zur Abstützung des Oberteiles 12 gegen das Unterteil 11.

Wie aus Fig. 2 weiter hervorgeht, sind die Längsflansche 16 und auch die Querflansche 18 jeweils um einen Spannflansch 21 verbreitert. An den Spannflansch 21 greift eine Spannvorrichtung 22 an. Die Spannvorrichtung 22 dient dazu, die einander zugewandten Stoßflächen 23 und 24 spaltfrei gegeneinander zu verspannen. Mit einem quer zu den Stoßflächen 23 und 24 gerichteten Laser-Strahl 25 einer Schweißvorrichtung 26 werden die Stoßflächen 23 und 24 im Bereich der Längsflansche 16 und der Querflansche 18 miteinander verschweißt. Die Verschweißung erfolgt eng benachbart der Sicke 17.

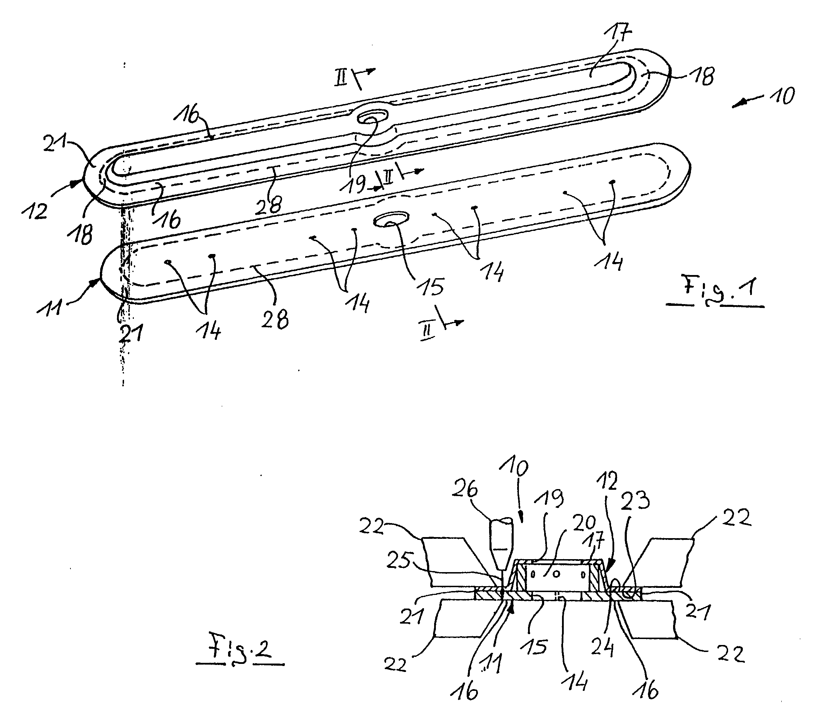

Nach dem Verschweißen von Oberteil 12 und Unterteil 11 zur Schmieröl-Verteilerleitung 10 wird der Spannflansch 21 in einem Stanzwerkzeug 27 in einem einzigen Schnittvorgang von den Längsflanschen 16 und den Querflanschen 18 entfernt. Die durch gestrichelte Linien in den Fig. 1 und 3 angedeutete Schnittkante 28 bedeutet die endgültige Kontur der fertigen Schmieröl-Verteilerleitung 10.

Die Schmieröl-Verteilerleitung kann bei Verzicht auf eine erhöhte Strahlqualität aus zwei gleichen dem Oberteil 12 entsprechenden und spiegelbildlich angeordneten Formteilen hergestellt werden, wobei die Formteile aus relativ dünnen Blechstreifen gebildet sind. Eine aus zwei Formteilen gebildete Verteilerleitung ist beispielsweise auch als Kraftstoff-Verteilerleitung denkbar.

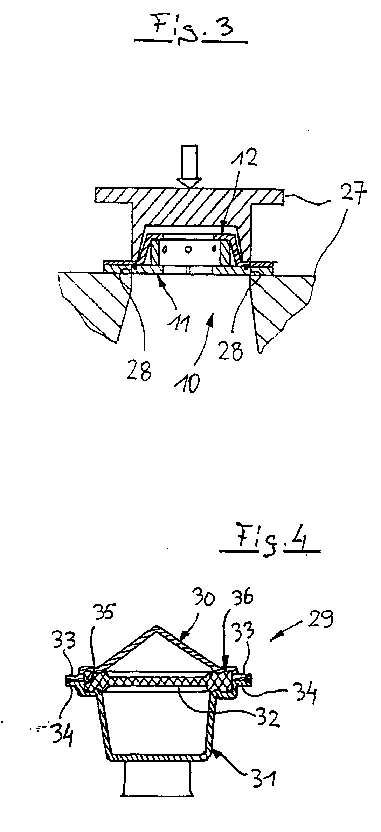

Eine in Fig. 4 im Querschnitt dargestellte Leitung 29 weist ein zwischen dem Oberteil 30 und dem Unterteil 31 durch Klemmen gehaltenes Einbauteil 32 auf. Das Einbauteil 32 kann beispielsweise bei einer im Kraftstoffversorgungssystem angeordneten Leitung 29 eine stoßdämpfende Membrane sein. Durch den geringen Wärmeanfall einer Laserschweißung, die im aufgezeigten Beispiel stirnseitig an Spannflanschen 33 und 34 durchgeführt ist, kann die Begrenzung 35 der das wärmeempfindliche Einbauteil 32 aufnehmenden Ausnehmung 36 entsprechend der Wärmebelastbarkeit des Einbauteiles 32 beabstandet angeordnet werden. Damit entfallen zusätzliche Einrichtungen zur Halterung einer Membrane 32, beispielsweise in einer Kraftstoff-Verteilerleitung 29.

## Patentansprüche

1. Verfahren zum Herstellen einer für flüssige oder gasförmige Medien bestimmten Leitung, insbesondere eine mit einer Anschlußöffnung versehenen Verteilerleitung mit in einer Leitungswand angeordneten Austrittsöffnungen, vor allem für Brennkraftmaschinen, wobei die zumindest aus einem Blechstreifen geformte Leitung durch Laser- oder Elektronenstrahlschweißen einander spaltfrei zugewandter Stoßflächen gebildet wird, dadurch gekennzeichnet, daß die Verteilerleitung aus zwei mit Flanschen ausgerüsteten Teilen aus Blechstreifen gebildet wird, wobei mindestens bei einem der Blechstreifen eine in Längsrichtung zwischen Längsflanschen verlaufende Sicke angeordnet wird, die in beiden Endbereichen des Blechstreifens jeweils in einem Abstand von der Endbegrenzung unter Belassung von die Längsflansche verbindenden Querflanschen endend ausgebildet wird, und daß die Stoßflächen der Flansche beider Teile spaltfrei gegeneinander verspannt werden für eine Verschweißung der Teile in den Stoßflächen mittels einer quer zu den Stoßflächen gerichteten Laser- oder Elektronenstrahles.

2. Verfahren nach Anspruch 1, dadurch gekennzeichnet, daß der bei der Schweißung als umlaufender Spannflansch an den Längs- und Quer-Flanschen der Teile dienende Bereich nach der Schweißung durch Stanzen entfernt wird.

3. Verfahren nach Anspruch 1 und 2, dadurch gekennzeichnet, daß die Verteilerleitung durch Laser-Schweißen von zwei gleichen, spiegelbildlich angeordneten Formteilen gebildet wird.

4. Verfahren nach den Ansprüchen 1–2 oder 3, für eine den Steuernocken einer Steuerwelle zugeordnete Austrittsöffnungen aufweisende Schmieröl-Verteilerleitung, dadurch gekennzeichnet, daß die Austrittsöffnungen bzw. Schmieröl-Spritzöffnungen mittels eines Laserstrahles hergestellt werden.

5. Verfahren nach Anspruch 4, dadurch gekennzeichnet, daß die Schmieröl-Verteilerleitung aus Blechstreifen unterschiedlicher Stärke gebildet wird, wobei die Schmieröl-Spritzöffnungen im stärkeren Blechstreifen angeordnet werden.

6. Verfahren nach einem oder mehreren der Ansprüche 1–5, dadurch gekennzeichnet, daß bei mindestens einem der Blechstreifen auf der dem Leitungsquerschnitt zugewandten Seite des Schweißflansches ein Absatz in der Stoßfläche ausgebildet wird, wobei die Begrenzung des zur Anordnung eines Einbauteiles dienenden Absatzes zur vorbestimmten Schweißverbindung der Flansche beider Blechstreifen entsprechend der Wärmebelastbarkeit des Einbauteiles beabstandet angeordnet wird.

7. Verfahren nach einem oder mehreren der Ansprüche 1–6, dadurch gekennzeichnet, daß Blechstreifen bzw. Teile aus verschiedenen Metallen miteinander zu einer Verteilerleitung verschweißt werden.

## Claims

1. A process for manufacturing a conduit for fluid or gaseous media, in particular a distributor conduit provided with a connection opening with outlet openings arranged in a conduit wall, especially for internal combustion engines, wherein the conduit, which is made from at least one sheet metal strip, is formed by laser- or electron beam welding of abutting ends facing each other without a gap, characterised in that the distributor conduit is formed from two parts of sheet metal strips equipped with flanges, wherein, at least in one of the sheet metal strips, a crease is arranged to run in a longitudinal direction between longitudinal flanges, which is constructed in both end regions of the sheet metal strip in each case to end at a distance from the end delimitation, leaving transverse flanges which connect the longitudinal flanges, and that the abutting ends of the flanges of both parts are clamped against each other without a gap for a welding of the parts in the abutting ends by means of a laser- or electron beam directed transversely to the abutting ends.

2. A process according to Claim 1, characterised in that the region serving as a circular spring flange on the longitudinal and transverse flanges of the parts during welding is removed by punching after the welding.

3. A process according to Claim 1 and 2, characterised in that the distributor conduit is formed by laser welding of two identical shaped parts which are arranged in mirror image.

4. A process according to Claims 1–2 or 3, for a lubricating oil distributor conduit, having outlet openings associated with the sequence-control cams of a camshaft, characterised in that the outlet openings or, respectively, lubricating oil spray openings, are produced by means of a laser beam.

5. A process according to Claim 4, characterised in that the lubricating oil distributor conduit is formed from sheet metal strips of differing thickness, wherein the lubricating oil spray openings are arranged in the thicker sheet metal strip.

6. A process according to one or more of Claims 1–5, characterised in that in at least one of the sheet metal strips, on the side of the welding flange facing the cross-section of the conduit, a shoulder is arranged in the abutting end, wherein the delimitation of the shoulder serving for the arrangement of an accessory part is arranged at a distance for the predetermined weld joint of the flanges of the two sheet metal strips corresponding to the thermal stress capacity of the accessory part.

7. A process according to one or more of Claims 1–6, characterised in that sheet metal strips or, respectively, parts of differing metals, are welded together into a distributor conduit.

## Revendications

1. Procédé de fabrication d'une conduite spéciale pour les matières fluides ou gazeuses, en particulier un conduit de répartition muni d'une ouverture d'assemblage, comprenant des orifices de sortie disposés dans une paroi du conduit, destiné avant tout aux moteurs à combustion interne,
– par lequel le conduit mis en forme au moins à partir d'un ruban de tôle est réalisé par soudage, au rayon laser ou rayonnement électronique, des surfaces d'about tournées l'une vers l'autre sans jeu, caractérisé:
– en ce que le conduit distributeur est constitué à partir de rubans de tôle en deux parties munies de collets, une moulure longitudinale aménagée au moins dans un des rubans, se développe dans le sens longitudinal entre des collets longitudinaux et ses extrémités situées dans les zones d'extrémité du ruban de tôle concerné se trouvent à une distance de la limite extrême fonction des collets transversaux réunissant les collets longitudinaux, et
– en ce que les surfaces d'about des collets des deux parties sont assemblées par serrage l'une contre l'autre sans jeu pour un soudage des parties par les surfaces d'about au moyen d'un rayon laser ou rayonnement électronique dirigé perpendiculairement aux surfaces d'about.

2. Procédé selon la revendication 1, caractérisé en ce que la zone servant pour l'opération de soudage de collet de serrage entourant les collets longitudinaux et transversaux des parties, se trouve éliminée après soudage par découpage.

3. Procédé selon les revendications 1 ou 2, caractérisé en ce que le conduit distributeur est réalisé par soudage au laser de deux pièces de forme égales, inversées.

4. Procédé selon les revendications 1, 2 ou 3, pour un conduit distributeur d'huile de lubrification comprenant des orifices de sortie associées aux cames radiales d'un arbre à cames, caractérisé en ce que les ouvertures de sortie ou ouvertures d'injection d'huile de lubrification sont produites par un rayon laser.

5. Procédé selon la revendication 4, caractérisé en ce que le conduit distributeur d'huile de lubrification est réalisé avec des rubans de tôle d'épaisseurs différentes, les ouvertures d'injection d'huile de lubrification étant pratiquées dans le ruban de tôle le plus épais.

6. Procédé selon une ou plusieurs des revendications 1 à 5, caractérisé en ce que, pour au moins un des rubans de tôle, il est réalisé, dans la surface d'about, un décrochement du côté du collet de soudure tourné vers la section transversale du conduit, la limite du décrochement qui sert à la mise en place d'une pièce incorporée, étant placé à une certaine distance par rapport à la jonction par soudage préfixée qui dépend de l'intensité de chaleur admissible par la pièce incorporée.

7. Procédé selon une ou plusieurs de revendications 1 à 6, caractérisé en ce que des rubans de tôle ou pièces de métaux différents sont assemblés par soudage pour constituer un conduit de distribution.

Fig. 1

Fig. 2

Fig. 3

Fig. 4